(19) Europäisches Patentamt
European Patent Office
Office européen des brevets

(11) **EP 4 083 412 B1**

(12) **EUROPEAN PATENT SPECIFICATION**

(45) Date of publication and mention
of the grant of the patent:
**27.12.2023 Bulletin 2023/52**

(21) Application number: **22169090.2**

(22) Date of filing: **20.04.2022**

(51) International Patent Classification (IPC):
*F01C 1/18* *(2006.01)* *F03B 11/04* *(2006.01)*
*F03B 17/06* *(2006.01)* *F03D 3/02* *(2006.01)*
*F01C 1/08* *(2006.01)*

(52) Cooperative Patent Classification (CPC):
**F03B 17/06; F01C 1/084; F01C 1/18; F03B 11/04;**
**F03D 3/02;** F05B 2240/30; Y02E 10/20

(54) **TURBINE**

TURBINE

TURBINE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **30.04.2021 IT 202100011114**

(43) Date of publication of application:
**02.11.2022 Bulletin 2022/44**

(73) Proprietor: **G.P.S. GREEN POWER SOLUTION SA**
**6900 Lugano (CH)**

(72) Inventors:
• **DI CARLO, Mario**
**20025 Legnano (MI) (IT)**

• **EGIZI, Ivo**
**deceased (IT)**

(74) Representative: **Cutropia, Gianluigi**
**Ing. Claudio Baldi s.r.l.**
**Viale Cavallotti, 13**
**60035 Jesi (AN) (IT)**

(56) References cited:
**EP-A1- 2 450 529** **EP-A1- 2 674 570**
**EP-A1- 2 767 716** **JP-A- 2002 130 165**
**US-A1- 2019 113 035**

**Description**

The present invention relates to a turbine, specifically to a hydraulic turbine for generating electricity.

The turbine is a driving machine suitable for collecting the kinetic energy and the enthalpy of a fluid and transforming it into mechanical energy. The turbine includes a fixed part (stator) and a moving part (rotor or impeller) comprising a crown of shaped elements (blades) that guide the fluid flow. The rotor receives energy from the fluid by rotating a shaft connected to a generator to produce electricity.

Three types of hydraulic turbines are known: Francis, Kaplan, and Pelton.

The Francis turbine is the most widely used hydraulic turbine. Such a turbine has a centripetal flow, in which the water reaches the impeller through a spiral duct. A distributor, which consists of vanes on the stator of the turbine, directs the flow to hit the blades of the impeller. However, the Francis turbine has a good efficiency for a flow rate approximately equal to the 80% of the maximum flow rate and a low efficiency for the other flow rate ranges.

The Kaplan turbine is a reaction turbine that exploits small jumps, up to a few tens of meters, but with large flow rates, greater than 300 m$^3$/s and up. Such a turbine includes a rotor consisting of a propeller with blades that can be oriented according to the variation of the water flow rate. Such a turbine has a lower efficiency than the Francis turbines, although the efficiency remains at the same level for a greater range of flow rate.

The Pelton turbine is generally used for water reservoirs with high jumps (usually between 300 and 1400 m) and small flow rates (less than 50 m$^3$/s) because it ensures the best possible efficiency. However, such a turbine is constrained to high jumps and small flow rates.

EP2674570A1 discloses a turbine that can be used as compressor, energy generator, pump or part of an engine. The turbine comprises a housing provided with an inlet port and at least one outlet port. The turbine also comprises two counter-rotating rotors enclosed in the housing and provided with curved arms. During the rotation, the two counter-rotating rotors intermesh to create chambers in continuously varying volumes inside the housing, wherein said chambers are delimited by the curved arms of the two rotors and of the housing.

EP2450529A1 discloses a pump-turbine comprising a housing and two counter-rotating wheels. Each wheel comprises two or more blades and an equivalent number of recesses. During the rotation of the two wheels, the blades of a wheel are introduced in the recesses of the other wheel.

EP2767716A1 discloses an electricity generating device comprising a housing, a first lobed rotor and a second lobed rotor rotatably arranged in a fluid passage enclosed by the housing such that the two rotors intermesh to create a high-pressure side and a low-pressure side. An electricity generator is coupled to each rotor. The electricity generator comprises a synchronization system that adjusts the position of the two rotors to prevent interference between the lobes of the first lobed rotor and of the second lobed rotor and any possible blocking of the generator.

The purpose of the present invention is to eliminate the drawbacks of the prior art by providing a turbine that is efficient and capable of achieving the highest possible efficiency without being constrained to the jump or to the flow rate of the water reservoir.

Another purpose of the present invention is to provide such a turbine that does not give problems of cavitation, vibration and overpressure inside the casing of the turbine.

Still another purpose of the present invention is to provide such a turbine that ensures a fluid seal inside the casing of the turbine, avoiding any leakage on the outside.

A further purpose of the present invention is to provide such a turbine which is safe, reliable and capable of minimizing wear and tear between the parts of the turbine.

These purposes are achieved in accordance with the invention with the features of the appended independent claim 1.

Advantageous embodiments of the invention appear from the dependent claims.

Further features of the invention will appear clearer from the following detailed description, which refers to a purely illustrative and therefore non-limiting embodiment thereof, illustrated in the appended drawings, wherein:

Fig. 1 is an exploded perspective view of the parts of the turbine according to the invention;
Fig. 2 is a block diagram that schematically illustrates the connection of the turbine shafts to a synchronizer and to a generator;
Fig. 3 is a schematic cross-sectional view of the turbine, illustrating the two rotors;
Fig. 4 is an exploded perspective view of a rotor illustrating two prominences of the rotor;
Fig. 5 is a partially interrupted perspective view of a portion of the rotor;
Fig. 6 is a schematic view of a rotor;
Fig. 7 is an enlarged detail of the rotor of Fig. 6 illustrating one tooth and two slots;
Fig. 8 is an enlarged detail of Fig. 7, which partially illustrates a tooth in cross-section, in such a way that a decompression hole of the tooth can be seen;
Fig. 9 is a view of a detail from Fig. 3, illustrating the decompression holes in the teeth of the two rotors of the turbine;

Fig. 10 is a construction drawing of the teeth and slots of the rotor; and

Fig. 11 is a constructive drawing of the recesses of the covers of the turbine.

With the aid of the figures, a turbine according to the invention is described, referred to collectively as reference numeral 100.

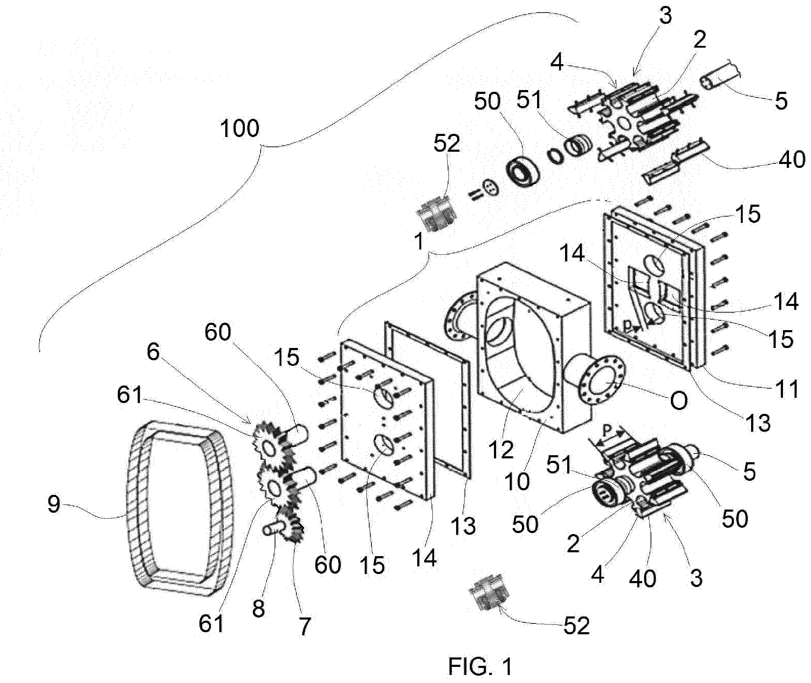

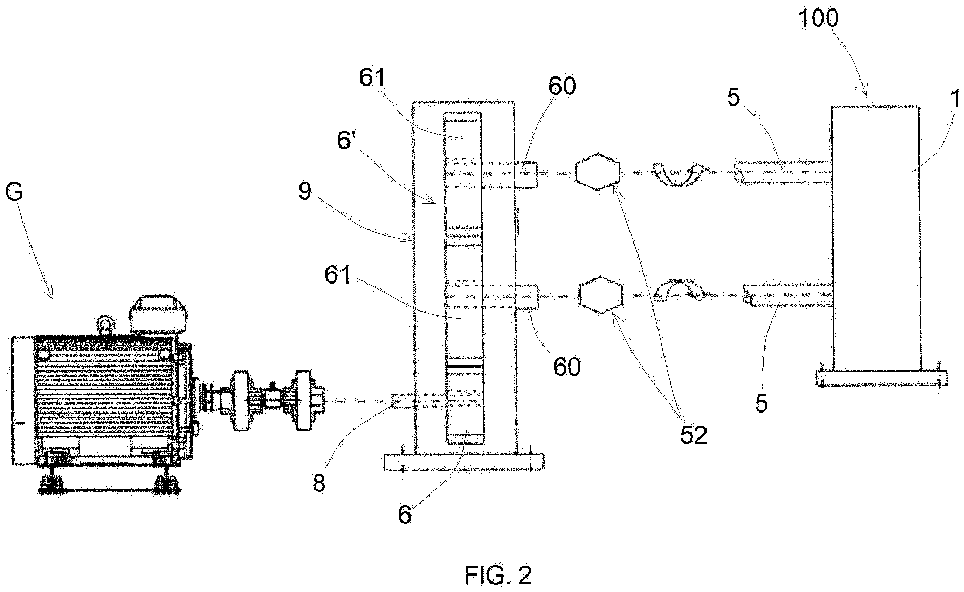

With reference to Figs. 1 and 2, the turbine (100) comprises a stator (1) comprising a central body (10) having a chamber (12) sealed by means of two plate-shaped covers (11).

The central body (10) has a parallelepipedal shape. The chamber (12) has a substantially elliptical shape.

Gaskets (13) are arranged between the central body (10) and the covers (11) to ensure a seal between the central body and the covers.

Each cover (11) has two recesses (14) arranged in a central position and communicating with the chamber (12) of the central body. The recesses (14) are used for a decompression and pressure equalization of the fluid inside the chamber (12). Each recess (14) has a substantially rectangular shape and a depth (p).

An inlet duct (I) and an outlet duct (O) are formed in the central body (10), communicating with the chamber (12) and with the outside, respectively for the inlet and the outlet of the fluid treated by the turbine. The inlet and outlet ducts (I, O) are arranged in diametrically opposite positions with respect to a center of the chamber (12) and have an axis corresponding with the minor axis of the ellipsoid of the chamber (12).

Due to the symmetry constructive features of the turbine, the inlet duct (I) and the outlet duct (O) can be chosen independently either on one side or on the opposite side of the central body (1).

Two rotors (3) are arranged in the chamber (12) of the central body with parallel axes of rotation, so as to be rotated by the action of the pressurized fluid entering the inlet duct and exiting the outlet duct.

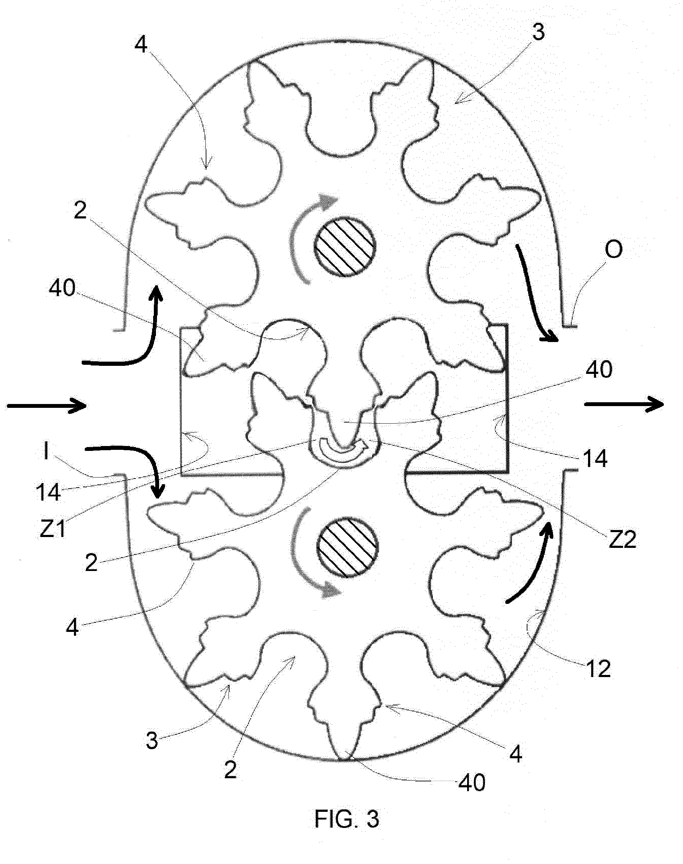

The rotors (3) include teeth (4) with prominences (40) and slots (2) generated between the teeth (4). During the rotation of the rotors (3) (Fig. 3), the prominences (40) of a rotor enter the slots (2) of the other rotor, without any contact between the teeth (4) of the two rotors. It should be noted that the teeth (4) of the two rotors do not engage with each other, as it occurs in a gear pump.

Each tooth (4) of each rotor has a length (P) corresponding to an extension of the tooth in a direction parallel to the axis of rotation of the rotor.

The number of teeth (4) of each rotor will depend on the displacement, on the flow rate, and on the degree of regularity required for the turbine. The degree of regularity is given by the following formula:

$$Gr = [\text{Maximum Flow Rate} - \text{Minimum Flow Rate}] / [\text{Average Flow Rate}].$$

The rotors (3) are mounted on respective shafts (5). The shafts (5) are rotatably supported by bearings (50) arranged in seats (15) of the covers (11). Mechanical seals (51) are interposed between the shafts (5) and the bearings (50) to ensure the seal of the stator (1) and to prevent any leakage of the flow from the chamber (12) of the stator towards the outside.

Ends of the shafts (5) of the rotors exit the housings (15) of one of the covers and are connected to shafts (60) of a synchronizer (6), by means of rotary joints (52) with zero angular tolerance to avoid synchronization errors. The synchronizer (6) includes synchronization gears (61) keyed onto the shafts (60) of the synchronizer. Evidently, the synchronization gear (61) may be keyed directly onto the shaft (5) of each rotor, outside the stator (1).

The synchronization gears (61) mesh with each other, outside the stator (1) of the turbine, so as to synchronize the rotational movement of the two rotors (3) inside the stator (1) of the turbine.

Each synchronization gear (61) is a cylindrical gear with helical teeth. The synchronization gears (61) have equal primitive diameters, which in turn are equal to the primitive diameters of the rotors (3).

Depending on the energetic and volumetric characteristics of the fluid treated by the turbine (100), there may also be a multiplier gear (7) that meshes with one of the two synchronization gears (61).

The multiplier gear (7) is keyed onto an output shaft (8) suitable for being connected to a generator (G), such as an alternator for generating electrical energy. Obviously, if there is no multiplier gear (7), the output shaft (8) is connected to one of the two synchronization gears (61).

In any case, the output shaft is operatively connected to the shafts (5) of the rotors and is driven into rotation by the rotation of the shafts of the rotors.

The synchronization gears (7) and the multiplier gear (8), together with their respective shafts and bearings (not shown in Fig. 1), are contained in a box (9) that is filled with oil. It should be noted that the box (9) is outside the stator (1), therefore the fluid treated by the turbine inside the stator (1) cannot mix with the oil in the box (9).

The output shaft (8) exits the box (9) to be connected to the generator (G).

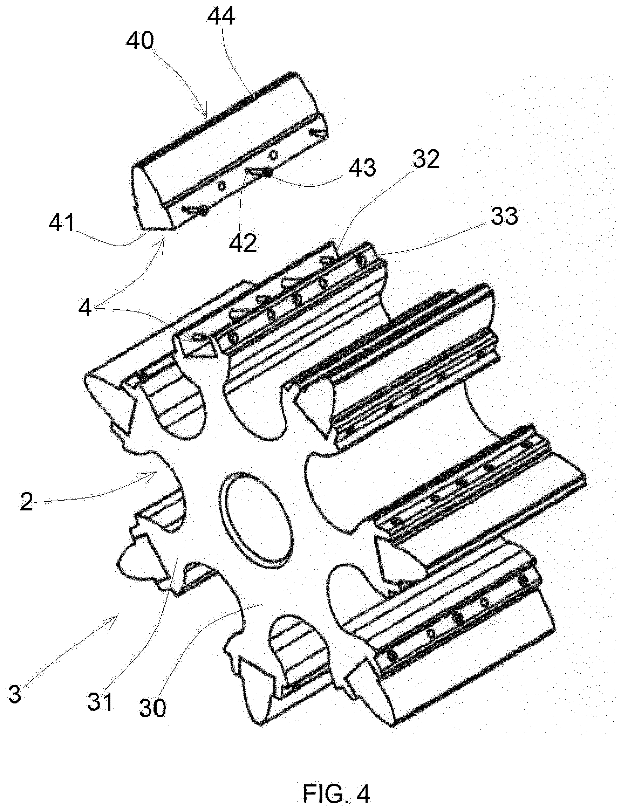

With reference to Figs. 4, 5, and 6, each rotor (3) may be made in multiple parts that can be assembled together. The rotor (3) comprises a cylindrical body (30) having a plurality of teeth (4) protruding radially from the cylindrical body.

Seven teeth are shown by way of example.

Each tooth (4) comprises:

- a wing (31) integral to the cylindrical body (30) of the rotor, and
- a prominence (40) that may be a separate piece from the wing (31).

Each wing (31) has an outwardly facing seat (32) having a substantially C-shaped or dovetail profile in cross-section.

The prominences (40) of the teeth (4) consist in sectors provided with a base (41) of substantially parallelepipedal shape that engages the seat (32) of the wing. The base (41) of the prominence has threaded holes (42) for accommodating screws (43) for securing the base (41) of the prominence inside the seat (32) of the wing. The seat (32) of the wing has holes (33) to let the screws (43) pass through.

Each prominence (40) is shaped as a semi-pseudo-ellipse in cross-section with two symmetrical, outwardly convex flanks (40a, 40b) and a flattened tip (44).

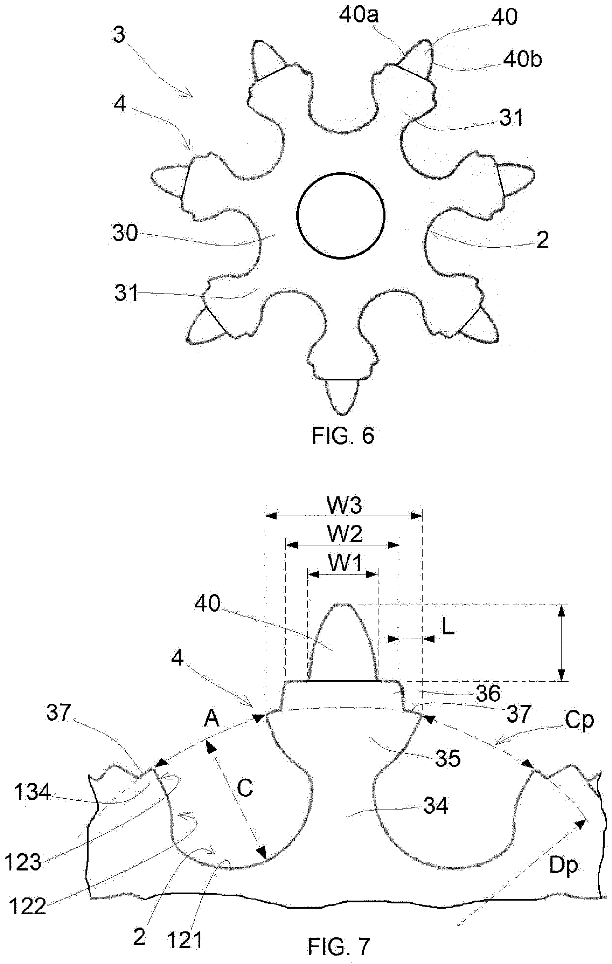

With reference to Fig. 6 and 7, each wing (31) comprises:

- a central portion (34) extending from the cylindrical body,
- a tapered peripheral portion (35) with increasing width until a maximum width (W3) is achieved,
- an end portion (36) having a width (W2) that is lower than the width (W3) of the peripheral portion (35), so as to generate a shoulder (37) of the tooth. The shoulder (37) of the tooth has a width (L).

The prominence (40) protrudes radially from the end portion (36) of the wing by a height (D). The prominence (40) has a maximum width (W1) that is lower than the width (W2) of the end portion (36) of the wing.

The slot (2) has a bottom wall (121) of concave shape, like an arc of a circle, and two flanks (122) defined by the peripheral portions (35) of two wings. The flanks (122) of the slot have an involute shape, that is to say two arcs of circle with opposite concavities.

The slot (2) has an inlet opening (123) having a width (A) measured as the distance between the peripheral portions (35) of two wings.

It should be noted that the width (A) of the inlet opening (123) of the slot is lower than the width (W3) of the peripheral portion (35) of the wing is higher than the width (W2) of the end portion (36) of the wing.

The slot (2) has a depth (C) measured as the radial distance between the bottom wall (121) of the slot and a primitive circumference (Cp) of the rotor passing through the shoulder (37) of the tooth. Thus, the rotor (3) has a primitive diameter (Dp) measured from the center of the rotor to the primitive circumference (Cp).

The depth (C) of the slot (2) is higher than the height (D) of the prominence (40).

Referring to Fig. 3, the rotors (3) are arranged in the chamber (12) of the stator, so that when a prominence (40) of a first rotor is inside a slot (2) of a second rotor, the end portion (36) of the wing of the first rotor is in correspondence with the inlet opening (123) of the slot of the second rotor in which the prominence of the first rotor is situated. In such a situation, the end portion (36) of the wing of the first rotor is close to the end portions (36) of two wings of the second rotor that define the slot (2) in which the prominence of the first rotor is situated, but the end portion of the wing of the first rotor does not touch the end portions of the two wings of the second rotor that define the slot in which the prominence of the first rotor is situated.

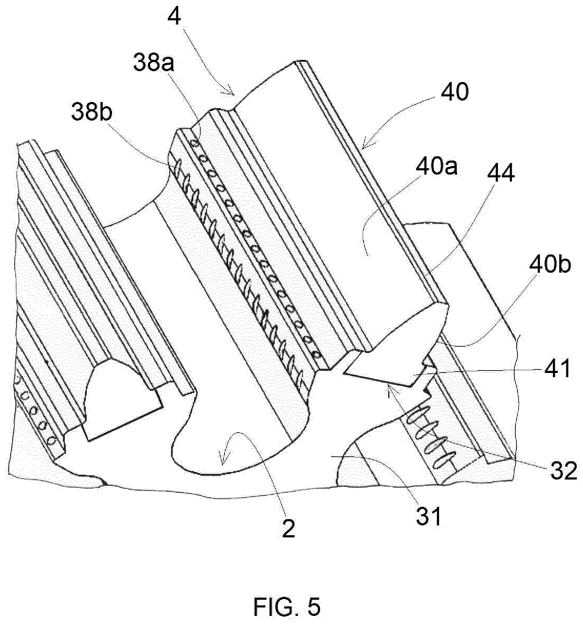

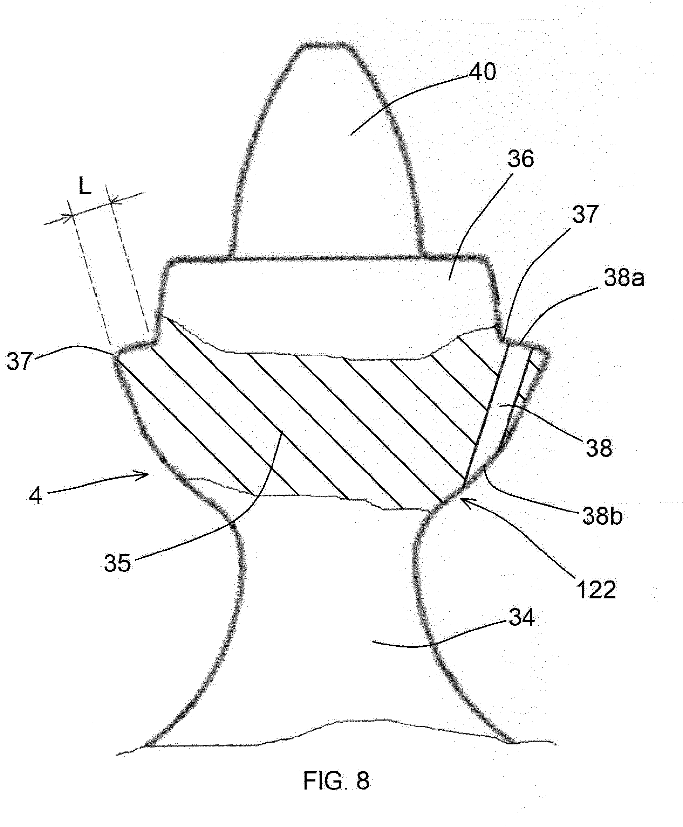

Referring to Figs. 5 and 8, each tooth (4) of the rotor has a plurality of decompression holes (38). Each decompression hole (38) has an inlet (38a) at one of the two shoulders (37) of the tooth and an outlet (38b) at a flank (122) of the slot.

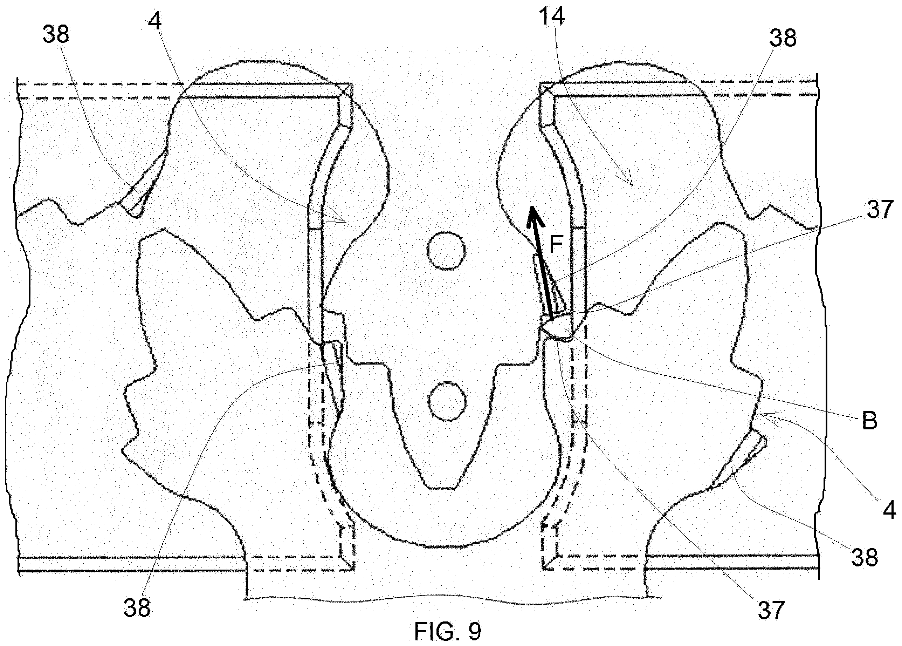

Fig. 9 illustrates the situation in which a fluid (B) is compressed between the shoulder (37) of a tooth of a first rotor and the shoulder (37) of a tooth of a second rotor. In this manner, the fluid (B) passes through the decompression holes (38) of the tooth of the first rotor and flows in the direction of the arrow (F) towards the recesses (14) of the covers of the stator.

The turbine (1) has been designed so as to solve the following problems, during the rotation of the rotors:

A) elimination of overpressure and cavitation phenomena in the slots (2) of the rotors;
B) reduction of pressure waves due to turbulence induced by the teeth (4) of the rotors;
C) reduction of overpressure between the shoulders (37) of the teeth of the rotor;
D) prevention of fluid leakage through the seal parts of the rotating shafts of the turbine into the box (9) that contains the synchronization gears (61).

The overpressure and cavitation phenomena in the slots were solved thanks to the conformation of the slots (2) and to the conformation of the recesses (14) of the covers, which were designed by means of parametric equations, as a function of the primitive diameter (Dp) of the rotor.

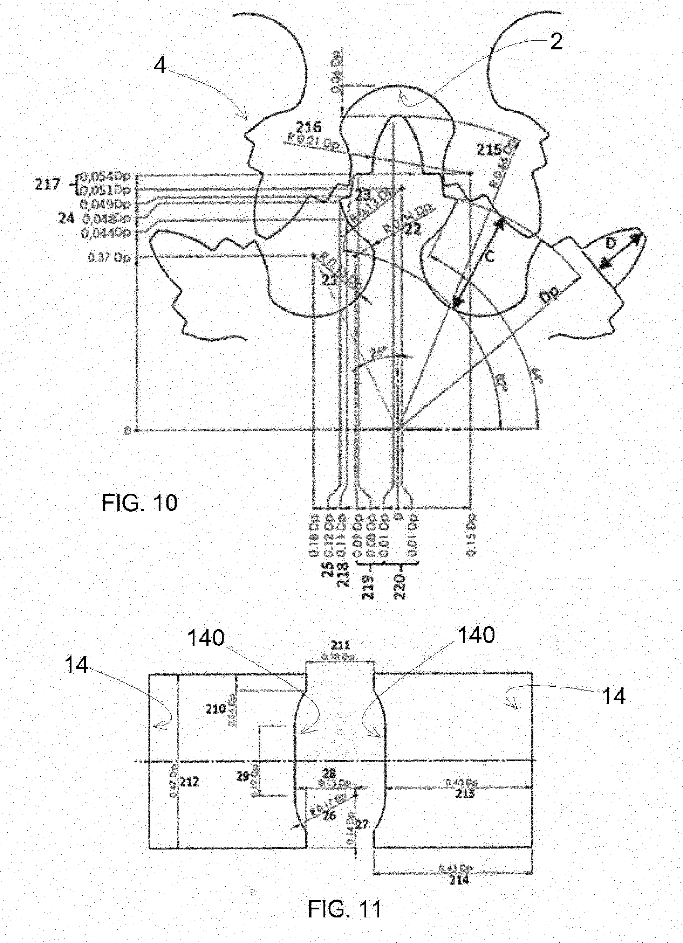

Fig. 10 shows the dimensions of the various elements of the slot (2) and of the tooth (4), as a function of the primitive diameter (Dp) of the rotor. These dimensional values may vary with a tolerance of +/- 5%.

The bottom (121) of the slot has a radius of curvature (21) of 0.13*Dp.

The flank (122) of the slot has a first part of the involute with a radius of curvature (22) of 0.04*Dp and a second part of the involute with a radius of curvature (23) of 0.13*Dp.

The ratio (t) of the depth (C) of the slot to the height (D) of the prominence is 1.33.

$$t = C/D = 1.33$$

Fig. 11 illustrates the dimensions of the various elements of the recesses (14) of the cover as a function of the primitive diameter (Dp) of the rotor. These dimensional values may vary with a tolerance of +/- 5%.

Each recess (14) has a maximum width (214) of 0.43Dp and a height (212) of 0.47*Dp.

The recesses (14) are spaced apart by a distance (211) of 0.18*Dp.

Each recess has three straight sides and a concave fourth side (140), in which the concavity of a concave side of a recess faces the concavity of the concave side of the other recess.

Each recess (14) has a minimum width (213) of 0.40*Dp.

The ratio (I) of the length (P) of the teeth (4) of the rotor to the depth (p) of the recesses (14) of the cover is 5.55.

$$I = P/p = 5.55$$

Referring to Fig. 3, three steps can be observed during the rotation of the prominence (40) of a tooth of a first rotor in the slot (2) of a second rotor:

Step 1) the prominence (40) of the tooth travels along an initial portion of the slot and the water compressed in the slot (2) is drained through the recesses (14) of the cover;

Stage 2) the prominence (40) of the tooth travels along a central portion of the slot (2) and the recesses (14) of the cover do not work. In such a step, the volume of the water in the slot (2) does not vary, but the particular conformation of the profile of the slot allows a passage of water from a first zone (Z1) of the slot on the left of the prominence (40) to a second zone of the slot (Z2) on the right of the prominence (40), without pressure increase, during the relative hourly rotation of the prominence (40) in the slot;

Step 3) the prominence (40) of the tooth travels along a final portion of the slot (2) and the water in decompression in the slot (2) (due to volume expansion) is equalized, in terms of pressure, through the recesses (14) of the cover, eliminating any cavitation phenomena.

The reduction of pressure waves due to turbulence induced by the teeth (4) of the rotor was solved thanks to the conformation of the profile of the teeth (4).

Fig. 10 illustrates various parts of the profile of the teeth with dimensions according to parametric equations as a function of the primitive diameter (Dp) of the rotor.

Such a profile of the teeth allows a reduction of the pressure waves entering and leaving the stator (1) of the turbine.

The applicant performed experimental tests, measuring the inlet and outlet pressure in a turbine made with standard gears, which are commonly available on the market for positive displacement pumps with gears, i.e. gears in which the teeth of a rotor engage in the slots of the other rotor. Following these tests, the applicant discovered that the pressure waves were excessive and led to malfunction and rapid wear of the gears.

On the other hand, from the experimental tests carried out with a turbine having gears with tooth profiles like those shown in the constructive drawings of Fig. 10, the applicant discovered that the inlet and outlet pressures of the stator decreased considerably with respect to a turbine with standard gears for positive displacement pumps. The turbine with gears according to the invention has inlet and outlet pressures of about 1/3 of the inlet and outlet pressures shown by a turbine with standard gears for positive displacement pumps.

For the reduction of overpressures between the shoulders (37) of the teeth of the rotor, depressurization holes (38) or a reduction in the width (L) of the shoulder (37) of the tooth are provided.

If depressurization holes (38) are provided, the shoulder (37) of the tooth has a width (L) of 0.0263*Dp.

It must be considered that the depressurization holes (38) result in a reduction of about 15% of the surface area of the shoulder (37) given by the product between the length of the tooth (P) and the width (L) of the shoulder.

If depressurization holes (38) are not provided, the width (L) of the shoulder can be reduced by 15% in such a way as to have the same surface reduction. Therefore, in such a case, the width (L) of the shoulder can be 0.0223 * Dp.

In both cases, a 15% reduction of the surface of the shoulder (37) allows for obtaining a water drainage area, almost halving the peak overpressures during this step.

It must be considered that in positive displacement pumps of the prior art, the synchronization gears are installed directly on the shafts of the rotors, inside the casing of the pump, which in such a case also contains the lubrication oil for the gears. Mechanical seals and gaskets separate the gear oil from the liquid treated by the pump. Therefore, in the event of a failure of the mechanical seals or gaskets, the (high pressure) process liquid would invade the chamber of the gears, inexorably damaging the machine due to the impairment of the lubricating power and to the pressure increase in the gear chamber.

Such a problem is solved in the turbine (100) according to the invention since the synchronizer (6) is completely external to the stator (1) of the turbine, and the rotating shafts (60) of the synchronizer are connected to the shafts (5) of the rotors of the turbine by means of the rotating joints (52). Accordingly, in the event of leakage from the mechanical seals or gaskets of the stator (1), the water will never be able to penetrate into the synchronizer (6).

**Claims**

1. Turbine (100) comprising:

   - a stator (1) comprising a central body (10) comprising a chamber (12) sealed by means of two covers (11),
   - an inlet duct (I) for the entrance of a pressurized fluid inside the chamber of the stator,
   - an outlet duct (O) for the exit of the pressurized fluid from the chamber of the stator,
   - two rotors (3) arranged in said chamber (12) of the stator; said rotors (3) being mounted on shafts (5) that are rotatably mounted in the stator in order to be driven into rotation by the pressurized fluid;
   - a synchronizer (6) disposed outside the stator (1) and connected to said shafts (5) of the rotors in order to synchronize the rotation of the rotors (3),
   - an output shaft (8) operatively connected to said shafts (5) of the rotors so as to rotate following to the rotation of the shafts of the rotors;
   - a generator (G) connected to said output shaft (8) to produce electricity,
   wherein said rotors (3) comprise teeth (4) with prominences (40) and slots (2) generated between the teeth (4), and said rotors (3) are arranged in said chamber (12) of the stator with parallel axes of rotation, in such a way that during the rotation of the rotors (3), the prominences (40) of a rotor enter the slots (2) of the other rotor, without any contact between the teeth (4) of the two rotors;
   wherein each cover (11) has two recesses (14) disposed in a central position and communicating with the chamber (12) of the central body for a decompression and pressure equalization of the fluid inside the chamber (12);
   **characterized in that** each tooth (4) of each rotor has a length (P) corresponding to an extension in a direction parallel to the axis of rotation of the rotor; each recess (14) of the cover has a depth (p) and the ratio (1) of the length (P) of the teeth (4) of the rotor to the depth (p) of the recesses (14) of the cover is 5.55 + 5% tolerance.

2. The turbine (100) of claim 1, wherein each rotor (3) comprises a cylindrical body (30) and a plurality of teeth (4) that protrude radially from the cylindrical body; each tooth (4) comprises a wing (31) that protrudes radially from the cylindrical body (30) and a prominence (40) that protrudes radially from the wing (31).

3. The turbine (100) of claim 1 or 2, wherein each prominence (40) is shaped like a semi-pseudo-ellipse in cross section with two symmetrical, outwardly convex flanks (40a, 40b) and a flattened tip (44).

4. The turbine (100) of claim 2 or 3, wherein each wing (31) comprises:

   - a central portion (34) that extends from the cylindrical body,
   - a tapered peripheral portion (35) with increasing width, until a maximum width (W3) is achieved
   - an end portion (36) with a width (W2) lower than the width (W3) of the peripheral portion (35), so as to generate a shoulder (37) of the tooth with a width (L),

   wherein the prominence (40) protrudes radially from the end portion (36) of the wing by a height (D) and the prominence (40) has a maximum width (W1) that is lower than the width (W2) of the end portion (36) of the wing.

5. The turbine (100) of claim 4, wherein each slot (2) comprises:

- a bottom wall (121) with concave shape, like an arc of circle,
- two involute-shaped sides (122), and
- an inlet (123) with a width (A) lower than the width (W3) of the peripheral portion (35) of the wing and higher than the width (W2) of the end portion (36) of the wing and higher than the maximum width (W1) of the prominence (40).

6. The turbine (100) of claim 5, wherein the slot (2) has a depth (C) measured as a radial distance between the bottom wall (124) of the slot and a primitive circumference (Cp) of the rotor passing through the shoulder (37) of the tooth; wherein said depth (C) of the slot (2) is higher than the height (D) of the prominence (40).

7. The turbine (100) of claim 6, wherein the ratio (t) of the depth (C) of the slot to the height (D) of the prominence is 1.33 + 5% tolerance.

8. The turbine (100) according to any one of claims 5 to 7, wherein the rotors (3) are arranged in the chamber (12) of the stator, in such a way that when a prominence (40) of a first rotor is inside a slot (2) of a second rotor, the end portion (36) of the wing of the first rotor is situated in correspondence with the inlet (123) of the slot of the second rotor wherein the prominence of the first rotor is situated, and the end portion (36) of the wing of the first rotor is close to the end portions (36) of two wings of the second rotor that define the slot (2) wherein the prominence of the first rotor is situated, but the end portion of the wing of the first rotor does not touch the end portions of the two wings of the second rotor that define the slot wherein the prominence of the first rotor is situated.

9. The turbine (100) according to any one of claims 5 to 8, wherein each tooth (4) of the rotor has a plurality of decompression holes (38); each decompression hole (38) has an inlet (38a) on one of the two shoulders (37) of the tooth and an outlet (38b) in correspondence with a flank (122) of the slot.

10. The turbine (100) according to any one of claims 2 to 9, wherein the prominences (40) of the teeth (4) consist in sectors provided with a base (41) that engages in a seat (32) of the wing.

11. The turbine (100) according to any one of the preceding claims, wherein said synchronizer (6) comprises two synchronization gears (61) having the same primitive diameter as the rotors (3); said synchronization gears (61) being keyed onto shafts (60) of the synchronizer connected to said shafts (5) of the rotors by means of rotary joints (52).

12. The turbine (100) according to claim 11, comprising a multiplier gear (7) that meshes with one of said synchronization gears (61); said multiplier gear being connected to said output shaft (8).

**Patentansprüche**

1. Turbine (100), umfassend:

- einen Stator (1), umfassend einen zentralen Körper (10), umfassend eine Kammer (12), die mittels zweier Verschlussdeckel (11) dicht verschlossen ist,
- eine Einlaufleitung (I) für den Einlauf eines druckbeaufschlagten Fluids in die Kammer des Stators,
- eine Auslaufleitung (O) für den Auslauf des druckbeaufschlagten Fluids aus der Kammer des Stators,
- zwei Rotoren (3), die in der Kammer (12) des Stators angeordnet sind;
wobei die Rotoren (3) auf Wellen (5) montiert sind, die drehbar in dem Stator eingebaut sind, um durch das druckbeaufschlagte Fluid in Drehung versetzt zu werden;
- eine Synchronisierungseinrichtung (6), die außerhalb des Stators (1) angeordnet ist und mit den Wellen (5) der Rotoren verbunden ist, um die Drehung der Rotoren (3) zu synchronisieren,
- eine Ausgangswelle (8), die mit den Wellen (5) der Rotoren wirkverbunden ist, um sich der Drehung der Rotorwellen folgend zu drehen;
- einen Generator (G), der mit der Ausgangswelle (8) verbunden ist, um Elektroenergie zu erzeugen,
wobei die Rotoren (3) Zähne (4) mit Erhebungen (40) und Vertiefungen (2) umfassen, die zwischen den Zähnen (4) erzeugt werden, und die Rotoren (3) in der Kammer (12) des Stators mit zueinander parallelen Drehachsen so angeordnet sind, dass während der Drehung der Rotoren (3) die Erhebungen (40) eines Rotors in die Vertiefungen (2) des anderen Rotors eindringen, ohne jeden Kontakt zwischen den Zähnen (4) der beiden Rotoren;
wobei jeder Verschlussdeckel (11) zwei Ausnehmungen (14) aufweist, die in einer mittigen Position angeordnet sind und mit der Kammer (12) des zentralen Körpers in Verbindung stehen zum Zwecke der Dekompression und des Druckausgleichs des Fluids in der Kammer (12);

**dadurch gekennzeichnet, dass** jeder Zahn (4) eines jeden Rotors eine Länge (P) aufweist, die einer Ausdehnung in eine zur Drehachse des Rotors parallelen Richtung entspricht; wobei jede Ausnehmung (14) der Abdeckung eine Tiefe (p) aufweist und das Verhältnis (1) zwischen der Länge (P) der Zähne (4) des Rotors und der Tiefe (p) der Ausnehmungen (14) der Abdeckung 5,55 + 5 % Toleranz beträgt.

2. Turbine (100) nach Anspruch 1, wobei jeder Rotor (3) einen zylindrischen Körper (30) und eine Vielzahl von Zähnen (4) umfasst, die radial aus dem zylindrischen Körper vorstehen; wobei jeder Zahn (4) einen Flügel (31) umfasst, der radial aus dem zylindrischen Körper (30) vorsteht, und eine Erhebung (40), die radial aus dem Flügel (31) vorsteht.

3. Turbine (100) nach Anspruch 1 oder 2, wobei jede Erhebung (40) im Querschnitt annähernd die Form einer Halbellipse mit zwei symmetrischen, auswärts konvexen Flanken (40a, 40b) und einer abgeflachten Spitze (44) aufweist.

4. Turbine (100) nach Anspruch 2 oder 3, wobei jeder Flügel (31) umfasst:

   - einen mittleren Abschnitt (34), der sich aus dem zylindrischen Körper erstreckt,
   - einen sich verjüngenden peripheren Abschnitt (35) mit zunehmender Breite bis Erreichen einer maximalen Breite (W3),
   - einen Endabschnitt (36) mit einer kleineren Breite (W2) als die Breite (W3) des peripheren Abschnitts (35), so dass eine Schulter (37) des Zahns mit einer Breite (L) erzeugt wird,

   wobei die Erhebung (40) radial aus dem Endabschnitt (36) des Flügels um eine Höhe (D) vorsteht und die Erhebung (40) eine maximale Breite (W1) aufweist, die kleiner ist als die Breite (W2) des Endabschnitts (36) des Flügels.

5. Turbine (100) nach Anspruch 4, wobei jede Vertiefung (2) umfasst:

   - eine Bodenwand (121) mit konkaver, kreisbogenartiger Form,
   - zwei Flanken (122) in Form einer Evolvente und
   - einen Einlass (123) mit einer Breite (A), die kleiner als die Breite (W3) des peripheren Abschnitts (35) des Flügels und größer als die Breite (W2) des Endabschnitts (36) des Flügels und größer als die maximale Breite (W1) der Erhebung (40) ist.

6. Turbine (100) nach Anspruch 5, wobei der Flügel (2) eine Tiefe (C) aufweist, gemessen als radialer Abstand zwischen der Bodenwand (124) der Vertiefung und einem Grundumfang (Cp) des Rotors, der zwischen der Schulter (37) des Zahns durchgeht; wobei die Tiefe (C) der Vertiefung (2) größer ist als die Höhe (D) der Erhebung (40).

7. Turbine (100) nach Anspruch 6, wobei das Verhältnis (t) zwischen der Tiefe (C) der Vertiefung und der Höhe (D) der Erhebung 1,33 + 5 % Toleranz beträgt.

8. Turbine (100) nach einem der Ansprüche 5 bis 7, wobei die Rotoren (3) in der Kammer (12) des Stators so angeordnet sind, dass wenn eine Erhebung (40) eines ersten Rotors sich in einer Vertiefung (2) eines zweiten Rotors befindet, der Endabschnitt (36) des Flügels des ersten Rotors sich an dem Einlass (123) der Vertiefung des zweiten Rotors befindet, in der sich die Erhebung des ersten Rotors befindet, und der Endabschnitt (36) des Flügels des ersten Rotors sich nahe den Endabschnitten (36) der beiden Flügel des zweiten Rotors befindet, die die Vertiefung (2) definieren, in der sich die Erhebung des ersten Rotors befindet, aber der Endabschnitt des Flügels des ersten Rotors berührt nicht den Endabschnitt der beiden Flügel des zweiten Rotors, die die Vertiefung definieren, in der sich die Erhebung des ersten Rotors befindet.

9. Turbine (100) nach einem der Ansprüche 5 bis 8, wobei jeder Zahn (4) des Rotors eine Vielzahl von Dekompressionslöchern (38) aufweist; wobei jedes Dekompressionsloch (38) einen Einlass (38a) auf einer der beiden Schultern (37) des Zahns und einen Auslass (38b) an einer Flanke (122) der Vertiefung aufweist.

10. Turbine (100) nach einem der Ansprüche 2 bis 9, wobei die Erhebungen (40) der Zähne (4) aus Sektoren bestehen, die mit einer Basis (41) versehen sind, die einen Sitz (32) des Flügels in Eingriff nimmt.

11. Turbine (100) nach einem der vorstehenden Ansprüche, wobei die Synchronisierungseinrichtung (6) zwei Synchronisierungszahnräder (61) umfasst, die denselben Grunddurchmesser wie die Rotoren (3) aufweisen; wobei die Synchronisierungszahnräder (61) auf Wellen (60) der Synchronisierungseinrichtung aufgezogen sind, die mittels Drehverbindungen (52) mit den Wellen (5) der Rotoren verbunden sind.

**12.** Turbine (100) nach Anspruch 11, umfassend ein Übersetzungsgetriebe (7), das eines der Synchronisierungszahnräder (61) in Eingriff nimmt; wobei das Übersetzungsgetriebe mit der Ausgangswelle (8) verbunden ist.

**Revendications**

**1.** Turbine (100) comprenant :

- un stator (1) comprenant un corps central (10) comprenant une chambre (12) fermée étanche moyennant deux couvercles de fermeture (11),
- une conduite d'entrée (I) pour l'entrée d'un fluide sous pression dans la chambre du stator,
- une conduite de sortie (O) pour la sortie du fluide sous pression depuis la chambre du stator,
- deux rotors (3) disposés dans ladite chambre (12) du stator ; lesdits rotors (3) étant montés sur des arbres (5) installés pivotants dans le stator pour tourner poussés par le fluide sous pression ;
- un synchroniseur (6) disposé à l'extérieur du stator (1) et relié aux dits arbres (5) des rotors pour synchroniser la rotation des rotors (3),
- un arbre de sortie (8) relié opérationnellement aux dits arbres (5) des rotors de façon à tourner suite à la rotation des arbres des rotors ;
- un générateur (G) branché au dit arbre de sortie (8) pour produire de l'énergie électrique,
où lesdits rotors (3) comprennent des dents (4) avec des saillies (40) et des creux (2) réalisés entre les dents (4) et lesdits rotors (3) sont disposés dans ladite chambre (12) du stator avec des axes de rotation parallèles entre eux, de sorte que pendant la rotation des rotors (3), les saillies (40) d'un rotor entrent dans les creux (2) de l'autre rotor, sans aucun contact entre les dents (4) des deux rotors ;
où chaque couvercle de fermeture (11) a deux renfoncements (14) disposés en position centrale et en communication avec la chambre (12) du corps central pour une décompression et égalisation de la pression du fluide dans la chambre (12) ;
**caractérisée en ce que** chaque dent (4) de chaque rotor a une longueur (P) correspondante à une extension en direction parallèle à l'axe de rotation du rotor ; chaque renfoncement (14) du couvercle a une profondeur (p) et entre la longueur (P) des dents (4) du rotor et la profondeur (p) des renfoncements (14) du couvercle, il y a un rapport (I) de 5,55 + 5% de tolérance.

**2.** Turbine (100) selon la revendication 1, où chaque rotor (3) comprend un corps cylindrique (30) et une pluralité de dents (4) qui débordent radialement du corps cylindrique; chaque dent (4) comprend une aile (31) qui déborde radialement du corps cylindrique (30) et une saillie (40) qui déborde radialement de l'aile (31).

**3.** Turbine (100) selon la revendication 1 ou 2, où chaque saillie (40) a une forme en section de demi-pseudo-ellipse avec deux côtés (40a, 40b) symétriques et convexes vers l'externe et une pointe aplatie (44).

**4.** Turbine (100) selon la revendication 2 ou 3, où chaque aile (31) comprend :

- une portion centrale (34) qui se déploie depuis le corps cylindrique,
- une portion périphérique (35) effilée ayant une largeur croissante, jusqu'à atteindre une largeur maximum (W3),
- une portion d'extrémité (36) ayant une largeur (W2) mineure de la largeur (W3) de la portion périphérique (35), de manière à générer un épaulement (37) de la dent ayant une largeur (L),

où la saillie (40) déborde radialement de la portion d'extrémité (36) de l'aile d'une hauteur (D) et la saillie (40) a une largeur maximum (W1) inférieure par rapport à la largeur (W2) de la portion d'extrémité (36) de l'aile.

**5.** Turbine (100) selon la revendication 4, où chaque creux (2) comprend :

- une paroi de fond (121) ayant forme concave, à arc de cercle,
- deux côtés (122) ayant forme de développante, et
- une ouverture d'entrée (123) ayant une largeur (A) mineure de la largeur (W3) de la portion périphérique (35) de l'aile et majeure de la largeur (W2) de la portion d'extrémité (36) de l'aile et majeure de la largeur maximum (W1) de la saillie (40).

6. Turbine (100) selon la revendication 5, où le creux (2) a une profondeur (C) mesurée comme distance radiale entre la paroi de fond (124) du creux et une circonférence primitive (Cp) du rotor qui passe à travers l'épaulement (37) de la dent ; où ladite profondeur (C) du creux (2) est majeure de la hauteur (D) de la saillie (40).

7. Turbine (100) selon la revendication 6, où entre la profondeur (C) du creux et la hauteur (D) de la saillie, il y a un rapport (t) de 1,33 + 5% de tolérance.

8. Turbine (100) selon l'une quelconque des revendications de 5 à 7, où les rotors (3) sont aménagés dans la chambre (12) du stator, de manière que lorsqu'une saillie (40) d'un premier rotor se trouve dans un creux (2) d'un second rotor, la portion d'extrémité (36) de l'aile du premier rotor se trouve en correspondance de l'ouverture d'entrée (123) du creux du second rotor où il y a la saillie du premier rotor et la portion d'extrémité (36) de l'aile du premier rotor est à proximité des portions d'extrémité (36) de deux ailes du second rotor qui définissent le creux (2) où il y a la saillie du premier rotor, mais la portion d'extrémité de l'aile du premier rotor ne touche pas les portions d'extrémité des deux ailes du second rotor qui définissent le creux où il y a la saillie du premier rotor.

9. Turbine (100) selon l'une quelconque des revendications de 5 à 8, où chaque dent (4) du rotor a une pluralité d'orifices de décompression (38) ; chaque orifice de décompression (38) ayant une entrée (38a) sur l'un des deux épaulements (37) de la dent et une sortie (38b) en correspondance d'un côté (122) du creux.

10. Turbine (100) selon l'une quelconque des revendications de 2 à 9, où les saillies (40) des dents (4) sont constituées de secteurs munis d'une base (41) qui s'engage dans un emplacement (32) de l'aile.

11. Turbine (100) selon l'une quelconque des revendications précédentes, où ledit synchroniseur (6) comprend deux engrenages de synchronisation (61) ayant le même diamètre primitif des rotors (3) ; lesdits engrenages de synchronisation (61) étant clavetés sur des arbres (60) du synchroniseur reliés aux dits arbres (5) des rotors moyennant des joints rotatifs (52).

12. Turbine (100) selon la revendication 11, comprenant un engrenage multiplicateur (7) qui s'embraie avec l'un desdits engrenages de synchronisation (61) ; ledit engrenage multiplicateur étant relié au dit arbre de sortie (8).

FIG. 1

FIG. 2

EP 4 083 412 B1

FIG. 3

FIG. 4

FIG. 5

FIG. 6

FIG. 7

FIG. 8

FIG. 9

EP 4 083 412 B1

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2674570 A1
- EP 2450529 A1
- EP 2767716 A1